# EUROPEAN PATENT APPLICATION

(11) **EP 0 540 192 A1**
(43) Date of publication of application: **05.05.1993**
(21) Application number: 92309093.0
(22) Date of filing: 06.10.1992
(51) Int. Cl.: F02C 7/32, B60K 25/00

(54) **Accessory drive assembly**

(30) Priority: 30.10.1991 US 785370
(71) Applicant: GENERAL ELECTRIC COMPANY, Schenectady, NY 12345 (US)
(72) Inventor: Doyle, Vincent Lynn, West Chester, Ohio 45069 (US); Glover, Jeffrey, Cincinnati, Ohio 45213 (US); Kaufman, Eric Scott, Forest Park, Ohio 45240 (US); Howell, Kevin Lee, Cincinnati, Ohio 45240 (US)
(74) Representative: Pratt, Richard Wilson

(57) **Abstract**

An accessory drive assembly includes an accessory gearbox (10) having at least one shaft seal disposed in a side thereof. An adapter plate (32) is fixedly mounted to the accessory gearbox and includes an access aperture aligned with the shaft seal, and an internal first conduit having first and second ports. A driven accessory (28,30) is fixedly joined to the adapter plate and includes an input shaft extending through the access aperture and the shaft seal and operatively joined to the gear train for receiving power therefrom. The accessory further includes a hole therein aligned with the first port of the adapter plate for channeling a fluid therebetween. The accessory hole and the adapter port provides an abutting sealed joint which is automatically disconnected upon removal of the accessory from the adapter plate.

## Description

The present invention relates generally to gas turbine engines, and, more specifically, to accessory drive assemblies thereof.

Conventional aircraft gas turbine engines typically include on accessory gearbox (AGB) which includes a main input shaft operatively joined to a rotor shaft of the engine for obtaining shaft horsepower therefrom. The accessory gearbox includes a conventional gear train therein which is powered by the main input shaft and provides shaft horsepower to various conventional accessories or components joined thereto. Each of the accessories typically includes an input shaft which is operatively joined to the gear train for receiving shaft power therefrom, with each of the accessories performing a respective function. Exemplary accessories include a hydraulic pump for providing pressurized hydraulic fluid to the aircraft for operating actuators and wing flaps, on integrated drive generator (IDG) which provides electrical power to the aircraft being powered by the engine, a pneumatic starter which is used to initially start the engine, a lubrication pump for providing pressurized lubricant to the engine, a main fuel pump (MFP) which pressurizes fuel used for both powering the engine and controlling the engine, and a hydromechanical unit (HMU) which is powered by fuel from the main fuel pump for powering actuators and valves for controlling operation of the engine in a conventional fashion.

Since most of these accessories channel a fluid such as fuel or lubrication oil, a considerable number of external conduits in the exemplary form of hoses, metal pipes, or combinations thereof, are required for suitably channeling the fluid. The conduits are typically joined to the accessories by conventional fluid joints or fittings which must be effective for suitably preventing leakage of the fluids therefrom.

In order to remove and replace one of the accessories during routine maintenance operation, the fittings and conduits must be suitably disconnected from the accessory which requires a considerable amount of manual labor which increases maintenance time and costs.

The engine typically also includes additional accessories which, although not driven by the accessory gearbox, also require external conduits and fittings for channeling fluid thereto and therefrom. For example, a conventional main fuel and oil heat exchanger is provided with two parallel circuits through which independently flow both fuel and oil, with the fuel being used to conventionally cool the oil. Another fuel and oil heat exchanger is provided for the integrated drive generator which similarly includes two parallel circuits for using feel to cool the IDG oil. And yet another fuel and oil heat exchanger is provided which includes parallel circuits therein for preheating the fuel by a heating oil under cold conditions. These additional heat exchangers are typically mounted adjacent to the accessory gearbox, and along with their conduits and fittings further increase the congestion in the region of the accessory gearbox, and further increase maintenance time and complexity.

A preferred embodiment of the present invention seeks to provide an accessory drive assembly having a reduced number of external conduits and fluid fittings for improving maintainability and reliability thereof.

An accessory drive assembly according to an embodiment of the invention includes an accessory gearbox having at least one shaft seal disposed in a side thereof. An adapter plate is fixedly mounted to the accessory gearbox and includes an access aperture aligned with the shaft seal, and an internal first conduit having first and second ports. A driven accessory is fixedly joined to the adapter plate and includes an input shaft extending through the access aperture and the shaft seal and operatively joined to the gear train for receiving power therefrom. The accessory further includes a hole therein aligned with the first port of the adapter plate for channeling a fluid therebetween. The accessory hole and the adapter port provides an abutting sealed joint which is automatically disconnected upon removal of the accessory from the adapter plate.

A preferred embodiment of the invention is more particularly described in the following detailed description taken in conjunction with the accompanying drawings in which:
Figure 1 is a perspective view of an accessory drive assembly in accordance with one embodiment of the present invention.
Figure 2 is an exploded view of a portion of the accessory drive assembly illustrated in Figure 1 showing accessories removed from an adapter plate joined to an accessory gearbox.
Figure 3 is a schematic representation of the adapter plate illustrated in Figure 2 showing fluid ports and internal conduits therein.
Figure 4 is a transverse, partly sectional view of a portion of the adapter plate and two adjacent accessories in Figure 3 taken along line 4-4.

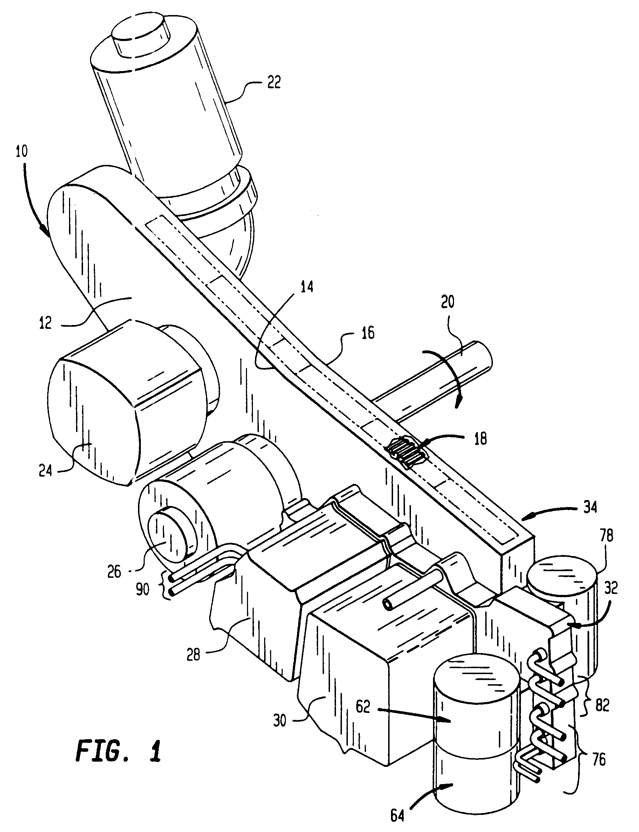

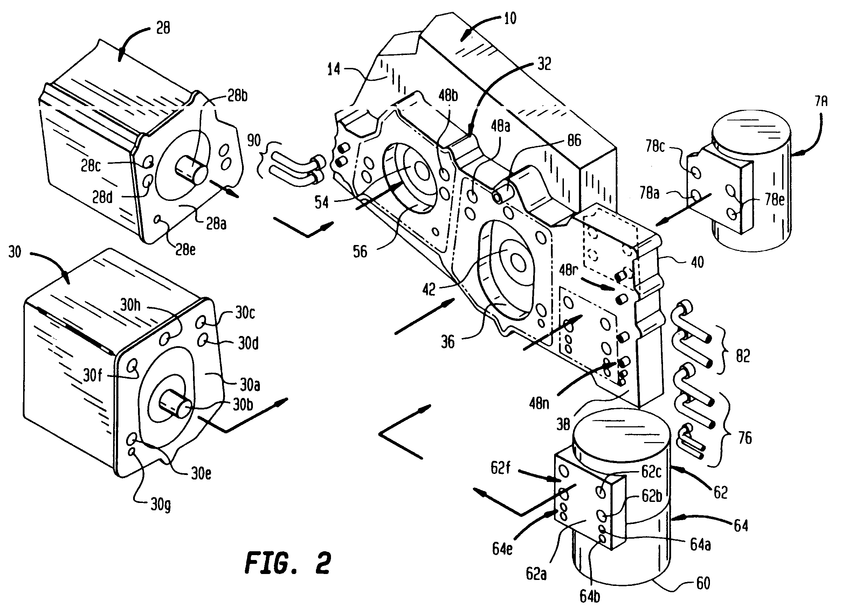

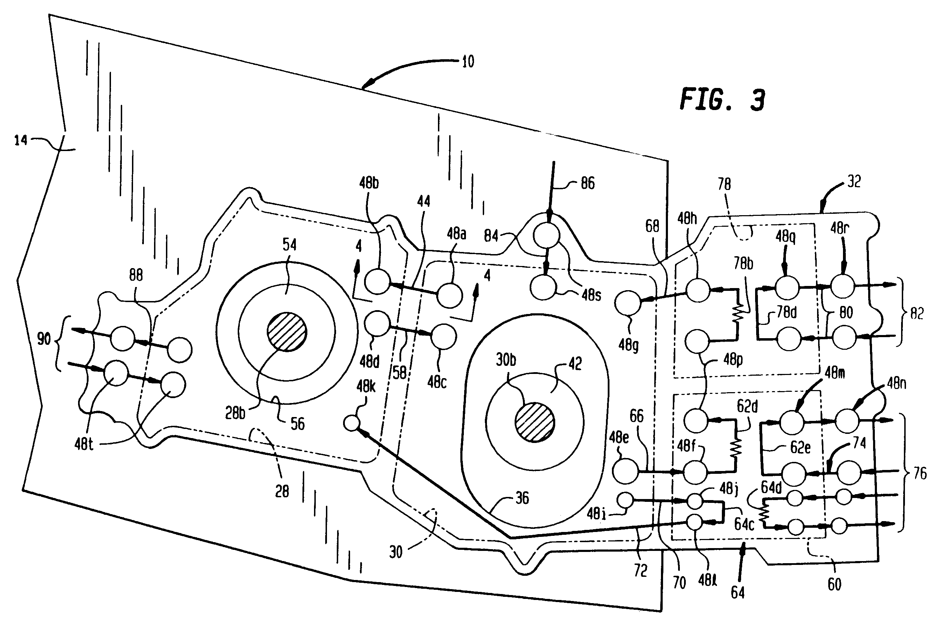

Illustrated in Figure 1 is an exemplary accessory gearbox (AGB) 10 for an aircraft gas turbine engine (not shown). The AGB 10 includes a casing 12 having first and second opposite sides 14 and 16, respectively, in which is contained a conventional gear train 18 which is conventionally lubricated with oil therein. A main input shaft 20 is operatively joined to the gear train 18 and extends outwardly from the casing second side 16 to a rotor shaft of the gas turbine engine (not shown) for providing power to the gear train 18. The AGB 10 typically provides shaft power to several conventional accessories or components including, for example, a conventional hydraulic pump 22 which provides pressurized oil to aircraft actuators for example; a conventional integrated drive generator (IDG) 24 which provides electrical power to the aircraft being powered by the engine; a conventional pneumatic starter 26 which is used to rotate the input shaft for starting the gas turbine engine; a hydromechanical unit (HMU) 28 which utilizes high pressure fuel for controlling engine operation; and a main feel pump 30 which pressurizes fuel for use in the HMU 28 and in the gas turbine engine. All of these or accessories have conventional shafts which extend through the respective casing first and second sides 14 and 16 and are operatively joined to the gear train 18 for rotation therewith. Accordingly, the starter 26 is selectively used for starting the gas turbine engine, and the running gas turbine engine powers the input shaft 20 for driving the accessories 22, 24, 28 and 30.

In a conventional accessory gearbox, the HMU 28 and the fuel pump 30 are joined directly to the AGB 10 for receiving shaft power therefrom. And, since these two accessories conventionally channel fuel therein a substantial number of external fluid conduits (not shown) in the form of hoses, tubing, or combination hose and tube, and a considerable number of fluid joints or fittings are required for connecting these accessories thereto. Further congesting the region adjacent to the AGB 10 in a conventional gas turbine engine are additional components such as fuel filters and heat exchangers which similarly use external conduits and fittings for channeling fluids such as oil and fuel therethrough.

Accordingly, for a conventional AGB 10, in order to remove any of these accessories during a maintenance operation, the fittings must be disconnected for removing the conduits from the accessory and providing space for removing that accessory. This increases the time required for completing a maintenance operation and therefore increases cost and delays use of the engine for revenue production. Furthermore, the substantial number of conduits and fittings increase the number of locations in which wear and leakage may occur which affects reliability of the engine.

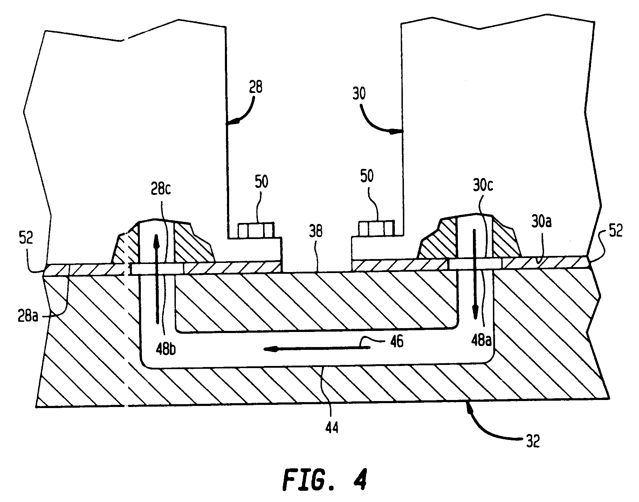

In accordance with the present invention, an adapter plate 32 is fixedly disposed between the AGB 10 and both the HMU 28 and the fuel pump 30 in this exemplary embodiment for allowing both the transfer of mechanical shaft power from the AGB 10 to these two accessories, as well as reducing the number of external fluid conduits and associated fittings required by instead internally channeling fluid between the adapter plate 32 and these accessories. The resulting combination of the AGB 10 and the adapter plate 32 including the components joined thereto is referred to herein as an accessory drive assembly 34. Illustrated in exploded view in Figure 2 are the HMU 28, fuel pump 30, adapter plate 32, a portion of the AGB 10, and additional components. The adapter plate 32 is conventionally fixedly mounted to the AGB casing first side 14 and includes a first access aperture 36 extending through first and second opposite sides 38 and 40 of the plate 32. The first aperture 36 is preferably coaxially aligned with a conventional first shaft seal 42 disposed in the casing first side 14 for sealing oil therein. The first aperture 36 is preferably larger than the first shaft seal 42 so that the first shaft seal 42 may be readily removed from the casing first side 14 during a maintenance operation without removing the adapter plate 32.

Referring to Figures 3 and 4, the adapter plate 32 preferably includes at least one internal first conduit or core passage 44 which may be conventionally integrally cast therein for providing a passage for flow of a first fluid such as fuel 46 therein. The first conduit 44 includes first and second ports 48a and 48b, respectively, at opposite ends thereof disposed preferably coplanar with the plate first side 38.

Referring again to Figure 2, the fuel pump 30 includes a first mating surface 30a which is conventionally removably fixedly joined against the adapter plate first side 38, by conventional bolts 50 as shown in Figure 4, and further includes a first input shaft 30b which extends through the first access aperture 36 and sealingly through the first shaft seal 42 upon assembly, and is conventionally operatively joined to the gear train 18 for receiving power therefrom to drive the fuel pump 30.

As shown in Figures 2 and 4, the fuel pump 30 further includes a first hole 30c disposed preferably coplanar with the first mating surface 30a and coaxially aligned with the first port 48a for channeling the fuel 48 between the fuel pump 30 and the first conduit 44. As shown in Figure 4, a conventional gasket 52 is provided between the first mating surface 30a and the adapter first side 38 with a corresponding aperture therein aligned with the first port 48a and the first hole 30c for providing a sealed joint or fitting for channeling the fuel 46 therethrough without leakage during operation. In this way, at least one external conduit and corresponding fitting may be eliminated and replaced by the internal conduit 44 for channeling the fuel 46 from the fuel pump 30.

Referring again to Figures 2 and 3, the AGB 10 further includes a conventional second shaft seal 54 disposed preferably in the casing first side 14, and the adapter plate 32 further includes a second access aperture 56 extending through the first and second plate sides 38 and 40 which is preferably coaxially aligned with the second shaft seal 54. The second access aperture 56 is similarly larger than the second shaft seal 54 for allowing access to the second shaft seal 54 for the removal thereof during a maintenance operation.

In this exemplary embodiment, the HMU 28 is preferably disposed adjacent to the fuel pump 30 on the plate first side 38 and includes a second mating surface 28a which is similarly removably fixedly joined against the plate first side 38 by additional ones of the bolts 50 as shown in Figure 4. The HMU 28 further includes a second input shaft 28b which extends through the second access aperture 56 and sealingly through the second shaft seal 54 and is similarly operatively joined to the gear train 18 for receiving power therefrom to drive the HMU 28. The HMU 28 further includes a first hole 28c disposed preferably coplanar with the second mating surface 28b and coaxially aligned with the second port 48b for channeling the fuel 46 between the HMU 28 and the fuel pump 30 through the first conduit 44 as shown in more particularity in Figures 3 and 4. Referring to Figure 4, another one of the gaskets 52 is similarly disposed between the second mating surface 28a and the plate first side 38 with a corresponding aperture therein aligned coaxially with the second port 48b and the second hole 28c for creating the sealed joint for channeling therethrough without leakage the fuel 46 during operation.

In the exemplary embodiment illustrated in the Figures, the fuel 46 is channeled from the fuel pump 30 under pressure through the first hole 30c, the first port 48a, the first conduit 44 within the adapter plate 32, the second port 48b, and the first hole 28c into the HMU 28. In this way the main fuel supplied from the feel pump 30 to the HMU 28 which is a considerable amount of fuel under high pressure may be more reliably channeled therebetween through the internal first conduit 44. The conventionally required corresponding external fuel conduits and related fittings may therefore be eliminated. And, the HMU 28 and the feel pump 30 are more easily removable during a maintenance operation by simply removing the respective bolts 50 and separating these components from the adapter plate 32 which automatically separates the first hole 30c from the first port 48a, and the first hole 28c from the second port 48b, and the fluid joints formed thereby. For reassembly, replacement gaskets 52 are provided and the HMU 28 and the fuel pump 30 are more readily reconnected to the adapter plate 32 while at the same time forming the sealed joints at the first and second ports 48a and 48b.

Conduits like the first conduit 44 illustrated in Figure 4, and sealed joints like these provided at the first and second ports 48a and 48b may also be provided where desired in the adapter plate 32 for replacing other conventional external conduits and corresponding fittings which would otherwise be required. In the preferred embodiment illustrated schematically in Figure 3, the adapter plate 32 further includes a second internal conduit 58 having third and fourth ports 48c and 48d at opposite ends thereof disposed preferably coplanar with the plate first side 38. And, the fuel pump 30 as shown in Figure 2 further includes a second hole 30d disposed preferably coplanar with the first mating surface 30a which is similarly sealingly coaxially aligned with the third port 48c for channeling the fuel 46 between the fuel pump 30 and the second conduit 58. The HMU 28 preferably includes a corresponding second hole 28d disposed coplanar with the second mating surface 28a which is similarly sealingly coaxially aligned with the fourth port 48d for channeling the fuel 46 between the HMU 28 and the fuel pump 30 through the second conduit 58 inside the adapter plate 32. The second conduit 58, therefore, replaces the conventional external fuel return bypass conduit which channels some of the fuel from the HMU 28 back to the fuel pump 30.

In the preferred embodiment, the first conduit 44 is a fuel supply line to the HMU 28, with the first port 48a being an inlet and the second port 48b being an outlet. The second conduit 58 is the fuel bypass return line, with the third port 48c being an outlet and the fourth port 48d being an inlet. Correspondingly, the fuel pump first hole 30c is an outlet for discharging the fuel 46 under pressure to the first conduit 46, and the second hole 30d is a bypass inlet for receiving the fuel 46 from the second conduit 58. Similarly, the HMU first hole 28c is an inlet for receiving the pressurized fuel 46 from the fuel pump 30, and the second hole 30d is an outlet for bypassing a portion of the pressurized fuel 46 from the HMU 28 through the second conduit 58 for return to the fuel pump 30.

Accordingly, the adapter plate 32 is effective not only for allowing transmission of shaft power therethrough to the fuel pump 30 and the HMU 28, but also is effective for channeling the fuel 46 therethrough and between the fuel pump 30 and the HMU 28 for eliminating otherwise required external conduits and fittings. The adapter plate 32 may be used additionally as a bracket for mounting additional components in a common housing 60, for example, such as a first, or main heat exchanger 62 and a second heat exchanger 64 which may be conventionally bolted thereto for eliminating the conventionally required brackets therefor, and for providing additional internal conduits for channeling fluid thereto for eliminating additional external conduits and fittings which would otherwise be required. The first and second heat exchangers 62 and 64 are preferably disposed on the plate first side 38 as shown in Figures 1 and 2. The additional internal conduits and ports which may be preferably included in the adapter plate 32 are shown schematically in Figure 3 with it being understood that such conduits and ports will be similar in construction to those illustrated in Figure 4 with appropriate diameters, lengths, and location in the adapter plate 32.

More specifically, the adapter plate 32 further includes a third internal conduit 66 having fifth and sixth ports 48e and 48f at opposite ends thereof disposed coplanar with the plate first side 38. A fourth internal conduit 68 includes seventh and eighth ports 48g and 48h at opposite ends thereof disposed coplanar with the plate first side 38. The fuel pump 30, as shown in Figure 2, further includes third and fourth holes 30e and 30f disposed coplanar with the first mating surface 30a which are sealingly coaxially aligned with the fifth and seventh ports 40e and 40g for channeling the fuel 46 therebetween.

The first heat exchanger 62, as shown also in Figure 2, includes a third mating surface 62a removably fixedly joined against the plate first side 38, by additions bolts 50 for example, and first and second holes 62b and 62c disposed coplanar therewith and in flow communication directly with the sixth port 48f, and indirectly with the eighth port 48h for channeling fuel between the fuel pump 30 and the first heat exchanger 62.

The adapter plate 32 further includes an internal fifth conduit 70 shown in Figure 3 having ninth and tenth ports 48i and 48j at opposite ends thereof disposed coplanar with the plate first side 38, and a sixth internal conduit 72 having eleventh and twelfth ports 48k and 48l at opposite ends thereof also disposed coplanar with the plate first side 38.

Referring to Figures 2 and 3, the fuel pump 30 further includes a fifth hole 30g disposed coplanar with the first mating surface 30a and sealingly coaxially aligned with the ninth port 48i for channeling the fuel 46 therebetween. The HMU 28 further includes a third hole 28e disposed coplanar with the second mating surface 28a and sealingly coaxially aligned with the eleventh port 48k for channeling the fuel 46 therebetween.

As shown in Figure 2, and schematically in Figure 3, the first and second heat exchangers 62 and 64 are preferably disposed in the common housing 60, and the second heat exchanger 64 includes first and second holes 64a and 64b, respectively, which are disposed coplanar with the common third mating surface 62a of the first heat exchange 62, and are sealingly coaxially aligned with the tenth and twelfth ports 48j and 48l, respectively, for channeling the fuel 46 therebetween.

In the preferred embodiment illustrated in Figures 2 and 3, the HMU 28 and the first and second heat exchangers 62 and 64 are disposed on opposite sides of the fuel pump 72 and the adapter plate 32 channels solely the fuel 46 longitudinally between the HMU 28 and the heat exchanger 62 and 64, with no oil being channeled therebetween. The eleventh port 48k is accordingly disposed under the NMU 28, with the sixth conduit 72 extending internally through the adapter plate 32 under the fuel pump 30 and to the twelfth port 48l. All six of the conduits 44, 58, 66, 68, 70, and 72 channel fuel only through the plate 32 for eliminating the possibility of mixing fuel and oil in the adapter plate 32 in the event of crack failure therein.

More specifically, the adapter plate 32 may also include additional internal conduits for channeling other fluids such as oil as desired for eliminating yet further external conduits and fittings which would otherwise be required. However, it is preferably desirable to ensure that internal conduits carrying fuel and oil are suitably separated from each other to prevent the undesirable mixing of fuel and oil in the event of damage to the adapter plate 32. As shown in Figure 3, the first heat exchanger 62 is preferably the conventionally known main fuel heat and oil heat exchanger wherein the fuel is channeled from the fuel pump 30 and through the third conduit 66 for flow through a fuel path 62d of the first heat exchanger 62. A conventional oil path 62e is also provided in the first heat exchange 62 which suitably channels oil therethrough for being cooled by the fuel path 62d.

Similarly, the second heat exchanger 64 in this exemplary embodiment is conventionally known as a servo heat exchanger for preheating the fuel 16 by oil under cold conditions. The second fuel exchanger 64, therefore, includes a fuel path 64c which receives fuel from the tenth port 48j which is heated therein and returned through the twelfth port 48l to the HMU 28. A conventional oil path 64d is provided in the second heat exchanger 64 and channels oil therethrough for heating the fuel channeled through the fuel path 64c. The oil paths 62e and 64d may be conventionally provided with oil through external conduits suitably joined through the casing 60 (not shown), or an additional four ports designated collectively as 48m may be disposed coplanar in the plate first side 38 for mating with corresponding two holes 62f in the first heat exchanger 62 and two holes 64e in the second heat exchanger 64. The four ports 48m are disposed at one end of four corresponding internal conduits designated collectively as 74, which have at an opposite ends thereof four additional ports designated collectively as 48n. The four ports 48n as shown in Figure 2 may be in the form of conventional fittings to which four corresponding external conduits designated collectively as 76 are suitably connected for channeling oil into and out of the adapter plate 32.

In this exemplary embodiment shown in Figures 2 and 3, a third heat exchanger 78 is provided for cooling the oil channeled through the integrated drive generator 24 (see Figure 1), and is preferably disposed on the adapter plate second side 40 where space permits. The third heat exchanger 78 may be conventionally provided with fuel and oil through conventional external conduits and fittings, or in this exemplary embodiment may also be connected to the adapter plate 32 using internal conduits and joints. More specifically, the adapter plate 32 preferably includes an additional two ports designated 48p with one on the plate first side 38 disposed in flow communication with a corresponding one of the holes 62f in the first heat exchanger 62 for receiving fuel therefrom, and the other disposed on the plate second side 40 in flow communication with a first hole 78a in the third heat exchanger 78 for channeling fuel thereto. The third heat exchanger 78 also includes a fuel path 78b which extends to a second hole 78c which is joined in flow communication with the eighth port 48h for returning fuel to the fuel pump 30. The third heat exchanger 78 also includes an oil path 78d which again may be provided with oil through conventional external conduits, or as illustrated in Figures 2 and 3, an additional two ports 48q are disposed coplanar in the plate second side 40 and aligned with two corresponding holes 78e in the third heat exchanger 78 for channeling oil therebetween. The two ports 48q are disposed at first ends of two corresponding internal conduits 80, and an additional two ports 48r are provided in the plate first side 38 at the opposite ends thereof for channeling the oil therebetween. As shown in Figure 2, the two ports 48r are in the form of conventional fittings which are conventionally connected to an additional two external conduits 82 which supply and return oil to the third heat exchanger 78 for the cooling thereof. In this exemplary embodiment, the first heat exchanger 62 and the third heat exchanger 78 are disposed in series flow with fuel being provided from the fuel pump 30 through the fifth port 48e as shown in Figure 3 and then channeled firstly through the first heat exchanger 62 and then through the third heat exchanger 78 and then returns to the fuel pump 30 through the seventh port 48g.

All of the internal fuel conduits shown in Figure 3 are separated from all of the internal oil conduits in the adapter plate 32 to reduce the possibility of fuel and oil mixing in the event of any failure in the adapter plate 32. All the internal conduits within the adapter plate 32 replace external conduits and the corresponding external fittings which would otherwise be required. The HMU 28, the fuel pump 30, and the three heat exchangers 62, 64, and 78 may be simply unbolted from the adapter plate 32 during a maintenance operation without requiring the removal of external conduits or the disconnection of external fittings. All of these components include respective gaskets 52 as shown in Figure 4 for example which seal the respective ports and holes upon assembly of the components through the adapter plate 32. Any other type of suitable seal may also be used. The external conduits 76 and 82 need not be disconnected from the adapter plate 32 for removal of these components, which, therefore, further improves maintainability and improves the reliability of operation.

The fuel pump 30 may be conventionally provided with fuel from a conventional external conduit, or as illustrated in Figures 2 and 3, another pair of ports 48s may be provided in the plate 32 with another internal conduit 84 extending therebetween for similarly providing fuel from an external conduit 86 through the plate 32 and into the fuel pump 30 through a corresponding sixth hole 30h as shown in Figure 2.

The HMU 28 as shown in Figures 2 and 3, conventionally includes a plurality of external conduits for channeling fuel from and to the HMU 28 for controlling various components. These external conduits also may be replaced by additional internal conduits 88 with corresponding ports 48t, with corresponding external conduits 90 being conventionally joined to the adapter plate 32.

Accordingly, by eliminating at least one, or more, external conduits and corresponding fittings as desired, and using internal conduits in the adapter plate 32, reliability and maintainability of the accessory drive assembly 34 may be improved. Components such as the heat exchangers 62, 64 and 78 which do not require shaft power from the AGB 10 may also be mounted to the adapter plate 32 for improved reliability and maintenance, or may be conventionally mounted to brackets located away from the AGB 10 as desired.

While there has been described herein what is considered to be a preferred embodiment of the present invention, other modifications of the invention shall be apparent to those skilled in the art from the teachings herein, and it is, therefore, desired to be secured in the appended claims all such modifications as fall within the true spirit and scope of the invention. For example, all of the internal conduits within the adapter plate may be simply conventionally cast therein, or, may be in the form of stronger tubes, such as stainless steel, integrally cast therein. Such tubes would further reduce the likelihood of failures thereof, and allow oil and fuel conduits to be located more closely adjacent to each other without concern of undesirable mixing of oil and fuel due to such failures.

## Claims

1. An accessory drive assembly comprising:
an accessory gearbox including a casing having first and second sides, a gear train, a main input shaft operatively joined to said gear train for providing power thereto, and a first shaft seal disposed in said casing first side;
an adapter plate fixedly mounted to said casing first side and including a first access aperture extending through first and second opposite sides thereof and aligned with said first shaft seal, an internal first conduit having first and second ports at opposite ends thereof disposed coplanar with said adapter plate first side; and
a first accessory including:
a first mating surface removably fixedly joined against said adapter plate first side,
a first input shaft extending through said first access aperture and said first shaft seal and operatively joined to said gear train for receiving power therefrom to drive said first accessory, and
a first hole disposed coplanar with said first mating surface and being coaxially aligned with said first port for channeling a first fluid between said first accessory and said first conduit

2. An assembly according to claim 1 wherein:
said accessory gearbox further includes a second shaft seal disposed in said casing first side;
said adapter plate further includes a second access aperture extending through said first and second opposite sides thereof and aligned with said second shaft seal; and
further including a second accessory having:
a second mating surface removably fixedly joined against said adapter plate first side,
a second input shaft extending through said second access aperture and said second shaft seal and operatively joined to said gear train for receiving power therefrom to drive said second accessory, and
a first hole disposed coplanar with said second mating surface and coaxially aligned with said second port for channeling said first fluid between said first and second accessories through said first conduit in said adapter plate.

3. An assembly according to claim 2 wherein:
said adapter plate further includes an internal second conduit having third and fourth ports at opposite ends thereof disposed coplanar with said adapter plate first side;
said first accessory further includes a second hole disposed coplanar with said first mating surface and coaxially aligned with said third port for channeling said first fluid between said first accessory and said second conduit; and
said second accessory further includes a second hole disposed coplanar with said second mating surface and coaxially aligned with said fourth port for channeling said first fluid between said first and second accessories through said second conduit in said adapter plate.

4. An assembly according to claim 3 wherein:
said first fluid is fuel;
said first conduit is a fuel supply line, said first port is an inlet, and said second port is an outlet;
said second conduit is a fuel bypass return line, said third port is an outlet, and said fourth port is an inlet;
said first accessory is a fuel pump, said first hole thereof is an outlet for discharging said fuel under pressure to said first conduit, and said second hole thereof is a bypass inlet for receiving fuel from said second conduit; and
said second accessory is a hydromechanical unit (HMU), said first hole thereof is an inlet for receiving said pressurized fuel from said fuel pump, and said second hole thereof is an outlet for bypassing a portion of said pressurized fuel from said HMU through said second conduit for return to said fuel pump.

5. An assembly according to claim 4 wherein:
said adapter plate further includes an internal third conduit having fifth and sixth ports at opposite ends thereof disposed coplanar with said adapter plate first side, and an internal fourth conduit having seventh and eighth ports at opposite ends thereof disposed coplanar with said adapter plate first and second sides, respectively;
said fuel pump further includes third and fourth holes disposed coplanar with said first mating surface and coaxially aligned with said fifth and seventh ports for channeling said fuel therebetween; and
further including a first heat exchanger having a third mating surface removably fixedly joined against said adapter plate first side, and first and second holes disposed coplanar with said third mating surface and in flow communication with said sixth and eighth ports for channeling said fuel between said fuel pump and said first heat exchanger.

6. An assembly according to claim 5 wherein:
said adapter plate further includes an internal fifth conduit having ninth and tenth ports at opposite ends thereof disposed coplanar with said plate first side, and an internal sixth conduit having eleventh and twelfth ports at opposite ends thereof disposed coplanar with said adapter plate first side;
said fuel pump further includes a filth hole disposed coplanar with said first mating surface and coaxially aligned with said ninth port for channeling said fuel therebetween;
said HMU further includes a third hole disposed coplanar with said second mating surface and coaxially aligned with said eleventh port for channeling said fuel therebetween; and
further including a second heat exchanger removably fixedly joined against said adapter plate first side and having first and second holes coaxially aligned with said tenth and twelfth ports for channeling said fuel therebetween.

7. An assembly according to claim 6 wherein said first and second heat exchangers are disposed in a common housing, and said second heat exchanger first and second holes are disposed coplanar with said third mating surface.

8. An assembly according to claim 7 wherein said HMU and said first and second heat exchangers are disposed on opposite sides of said fuel pump, and said adapter plate channels solely said fuel longitudinally between said HMU and said first and second heat exchangers.

9. An assembly according to claim 4 further including respective gaskets disposed between said adapter plate and each of said first and second accessories and said first and second heat exchangers for preventing leakage of said fuel therebetween.
